# EUROPEAN PATENT SPECIFICATION

(11) **EP 2 231 816 B1**
(45) Date of publication and mention of the grant of the patent: **19.10.2011**
(21) Application number: 08858191.3
(22) Date of filing: 25.11.2008
(51) Int. Cl.: C09K 11/79

(54) **CERAMIC MATERIAL FOR LEDS WITH REDUCED SCATTERING AND METHOD OF MAKING THE SAME**
KERAMIKMATERIAL FÜR LEDS MIT REDUZIERTER STREUUNG UND VERFAHREN ZU IHRER HERSTELLUNG
CÉRAMIQUE POUR DEL À DIFFUSION RÉDUITE ET PROCÉDÉ DE FABRICATION DE CELLE-CI

(30) Priority: 03.12.2007 EP 07122157
(43) Date of publication of application: 29.09.2010
(73) Proprietor: Philips Intellectual Property & Standards GmbH, 20099 Hamburg (DE); Koninklijke Philips Electronics N.V., 5621 BA Eindhoven (NL)
(72) Inventor: TUECKS, Andreas, NL-5656 AE Eindhoven (NL); SCHMIDT, Peter, J., NL-5656 AE Eindhoven (NL); BECHTEL, Hans-Helmut, NL-5656 AE Eindhoven (NL)
(74) Representative: Bekkers, Joost J.J
(86) International application number: PCT/IB2008/054938
(87) International publication number: WO 2009/072029

(56) References cited:
- EP-A- 1 838 808
- EP-A- 1 854 339
- WO-A-2008/056300

## Description

### FIELD OF THE INVENTION

The present invention is directed to luminescent materials for light emitting devices, especially LEDs.

### BACKGROUND OF THE INVENTION

Phosphors comprising silicates, phosphates (for example, apatite) and aluminates as host materials, with transition metals or rare earth metals added as activating materials to the host materials, are widely known. As blue LEDs, in particular, have become practical in recent years, the development of white light sources utilizing such blue LEDs in combination with such phosphor materials is being energetically pursued. With the advent of ceramic luminescent materials, also blue LEDs could be almost completely converted to green or red colors.

Especially, luminescent materials based on the so-called "SiAlON"-system are in the focus of attention in the field due to their good optical features. As an example, EP 1854339 discloses an illumination system comprising a radiation source and a monolithic ceramic luminescence converter comprising at least one phosphor capable of absorbing part of the light emitted by the radiation source and emitting light of a wavelength different from that of the absorbed light, wherein the at least one phosphor is an Eu(II)-activated oxonitridosilicate of the general formula (Sr_{1-a-b-c-d-e-f}Ca_{b}Ba_{c}Mg_{d}ZnₑCe_{f})Si_{x-g}Ge_{g}N_{y}O_{z}:Euₐ, wherein 0.001<a<0.2, 0.0<b<1.0, 0.0<c<0.5, 0.0<d<0.25, 0.0<e<0.25, 0.0<f<0.2, 0.0<g<1.0, 1.5<x<2.5, 1.5<y<2.5, and 1.5<z<2.5.

However, there is still the continuing need for luminescent materials which are usable within a wide range of applications and especially allow the manufacture of phosphor warm white pcLEDs with optimized luminous efficiency and color rendering.

### SUMMARY OF THE INVENTION

It is an object of the present invention to provide a light emitting device comprising a luminescent material which has improved optical features together with a good producibility and stability.

This object is achieved by a light emitting device according to claim 1 of the present invention. Accordingly, a light emitting device, especially LEDs, is provided, comprising at least one first luminescent material emitting a first wavelength and at least one ceramic converter material which at least partially absorbs the first wavelength and subsequently emits light of a second wavelength which is larger than the first wavelength, said ceramic converter material having a scattering intensity SI(20) at 20° and a scattering intensity SI(40) at 40°, with SI(20)/SI(40) >1.5, wherein the material essentially has the composition Sr_{1-y-z}M_{y}Si₂O₂N₂:Eu_{z} wherein M is selected out of the group comprising Ca, Ba, Mg or mixtures thereof, and y is ≥ 0 to ≤1, and z is ≥ 0.0001 to ≤0.5

The term "scattering intensity SI (Y) at Y°" is defined as follows:
A 100 µm wafer is polished to optical quality (Ra <20 nm).
Monochromatic light of a wavelength λ is emitted under normal incidence (= perpendicular to the wafer) on the ceramic converter material, with λ chosen in a region of the visible spectrum where the absorption coefficient a is <30 cm⁻¹.

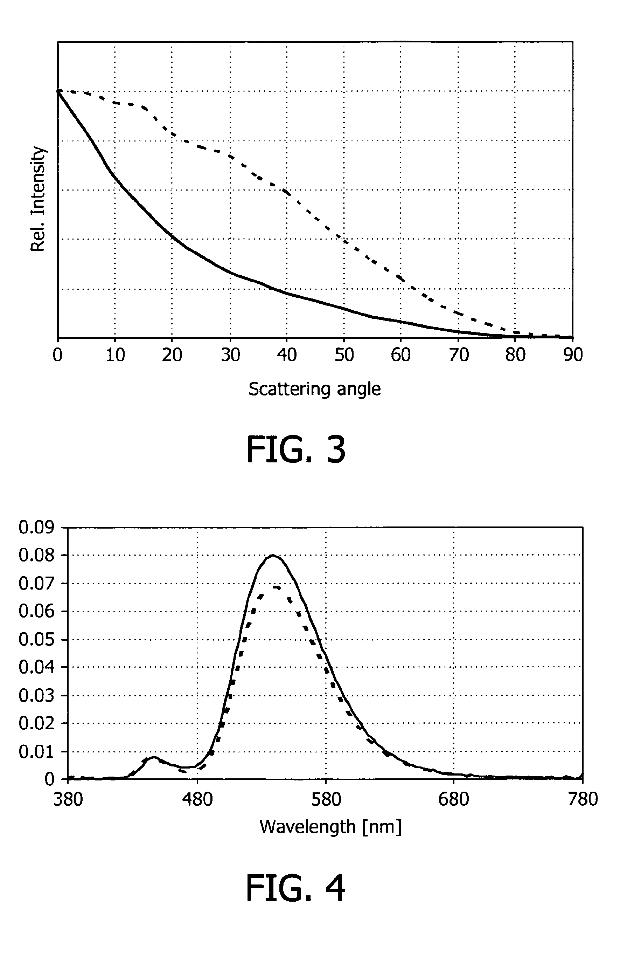

The scattering intensity (= transmitted light at a scattering angle) measured at an angle of 0° (= perpendicular to the wafer) is 100% (cf. also Fig 3). The scattering intensity SI (Y) at Y° is then measured at an angle of Y°.

The term "ceramic converter material" in the sense of the present invention means and/or includes especially a crystalline or polycrystalline compact material or composite material which has a controlled amount of pores or which is pore-free.

The term "polycrystalline material" in the sense of the present invention means and/or includes especially a material with a volume density larger than 90 percent of the main constituent, consisting for more than 80 percent of single crystal domains, with each domain being larger than 0.5 µm in diameter, and the material may have different crystallographic orientations. The single crystal domains may be connected by amorphous or glassy material or by additional crystalline constituents.

A ceramic converter material according to the present invention has been found which, for many applications, has at least one or more of the following advantages:
- The found optical scattering enhances the conversion efficiency of the device, because scattering may lead to absorption losses.
- The found optical scattering enhances the mixing of converted light with transmitted non-converted light and provides a high package efficiency.

Preferably, the ceramic converter material has a scattering intensity SI(20) at 20° and a scattering intensity SI(40) at 40°, with SI(20)/SI(40) >1.6, preferably SI(20)/SI(40) > 1.8.

According to a preferred embodiment of the present invention, the ceramic converter material has a scattering intensity SI(30) at 30° and a scattering intensity SI(60) at 60°, with SI(30)/SI(60) >1.9. This furthermore increases the conversion efficiency for many applications within the present invention.

Preferably, the ceramic converter material has a scattering intensity ratio SI(30)/SI(60) >2.5, preferably SI(30)/SI(60) >2.9.

According to a preferred embodiment of the present invention, the ceramic converter material shows a preferred orientation of its constituting crystallite grains, which is defined as its texture.

In order to detect a preferential orientation, X-ray diffraction techniques may be applied. Ceramics without preferential orientation exhibit X-ray diffraction patterns whose relative peak intensities are identical to those calculated for the corresponding material. The calculation of X-ray patterns requires knowledge of the material's crystal structure, but information on crystal morphology is not necessary. X-ray diffraction patterns of textured ceramics show significant deviations of peak intensities compared to the theoretical pattern, i.e. some reflections show enhanced intensities while others may exhibit intensities that even fall below the detection limit. Which reflections, characterized by their Miller indices, show increased or decreased intensities generally depends on the measuring geometry, i.e. the alignment of the ceramic sample relative to the X-ray beam, the morphology as well as the orientation of the grains within the sample.

Preferably, the ceramic converter material shows a preferred orientation of its constituting crystallite grains, so that Int_{peak A} : Int_{peak B}≥ 3, preferably ≥5, more preferably ≥7 and most preferably ≥9, wherein Int_{peak A} : Int_{peak B} is defined as follows:

For compounds of the general composition Sr_{1-x-y}MₓEu_{y}Si₂O₂N₂, with M = Ca, Ba, Mg or mixtures thereof, that are isotypic with the host compound SrSi₂O₂N₂, Int_{peaK A} is either given by the intensity of the (0 2 0) reflection (the crystallographic setting is chosen in such a way that (0 k 0) lattice planes are parallel to the [Si₂O₂N₂]²⁻ layers in the crystal structure) or by the sum of the intensities of the (0 2 0) and (120) reflection (if the peaks are not sufficiently separated in the XRD powder pattern to determine the intensity of the (0 2 0) reflection), whereas Int_{Peak B} is given by the intensity of the (2 2 0) reflection or by the sum of the intensities of the (2 2 0) and (2-10) reflection (if the peaks are not sufficiently separated in the XRD powder pattern to determine the intensity of the (2 2 0) reflection).

According to a preferred embodiment of the present invention, the ceramic converter material is essentially made out of grains with a d₅₀ of ≥5 µm. This has been shown to further decrease scattering within a wide range of applications.

The term "essentially" in the context of this invention means especially that ≥ 75 %, preferably ≥ 80 % and most preferably ≥ 90 % of the material has the desired composition and/or structure.

The term "d₅₀" in the sense of the present invention is a measure for the average particle size and is defined as follows: the size of 50% of the number of particles (e.g. grains) in the corresponding sample is equal or smaller than the given d₅₀ value. The term "particle size" especially represents the diameter of a sphere whose volume is identical to that of the particle under consideration having an arbitrary shape.

Preferably, the ceramic converter material is essentially made out of grains with a d₅₀ of ≥ 7 µm.

The ceramic converter material according to the invention has shown to be advantageous for a wide range of applications for the following reasons:
- The stability of the material is usually improved compared to materials of the prior art. The material has usually a very high thermal, especially photothermal, stability.
- The spectrum of this material is usually rather sharp, thus allowing the use in many applications within the present invention.

The term "photothermal stability" in the sense of the present invention especially means and/or includes the conservation of the luminescence intensity under simultaneous application of heat and high intensity excitation, i.e. a photothermal stability of 100% indicates that the material is virtually unaffected by the simultaneous exposure to radiation and heat.

According to a preferred embodiment of the present invention, the photothermal stability of the ceramic converter material is ≥82.5% to ≤105%, preferably ≥85% to ≤100%, after exposure of the ceramic converter material for 1000 hrs at 200°C with a light power density of 10W/cm² and an average photon energy of 2.75 eV.

According to a preferred embodiment of the present invention, the thermal conductivity of the ceramic converter material is ≥ 1 W m⁻¹K⁻¹ to ≤ 20 W m⁻¹K⁻¹

According to one embodiment of the present invention, the ceramic converter material shows a transparency at normal incidence in air of≥10 % to ≤85 % for light in the wavelength range from ≥ 550 nm to ≤ 1000 nm.

Preferably, the transparency at normal incidence in air is ≥20 % to ≤ 80 % for light in the wavelength range from ≥ 550 nm to ≤ 1000 nm, more preferably ≥30 % to ≤75 % and most preferably> 40% to < 70% for light in the wavelength range from ≥550 nm to ≤ 1000 nm.

The term "transparency" in the sense of the present invention means especially that
≥ 10%, preferably ≥20%, more preferably ≥30%, most preferably ≥40% and ≤85% of the incident light of a wavelength which is not absorbed by the material is transmitted through the sample at normal incidence in air (=perpendicular to the surface). This wavelength is preferably in the range of ≥ 550 nm and ≤1000 nm.

According to a preferred embodiment of the present invention, the ceramic converter material has a density of ≥95% and ≤ 101% of the theoretical density.

According to a preferred embodiment of the present invention, the ceramic converter material has a density of ≥97% and ≤ 100% of the theoretical density.

The densities lower than 100% according to the described preferred embodiment of the present invention are preferably obtained by sintering of the ceramic to a stage where pores are still present in the ceramic matrix. Most preferred are densities in the range ≥98.0% and ≤99.8% with total pore volumes in the ceramic matrix within the range of ≥0.2 - ≤2%. A preferred mean pore diameter is in the ≥1000 - ≤ 5000 nm range.

The present invention furthermore relates to a method of producing an inventive material, comprising uniaxially hot pressing of at least one precursor compound, the pressing step being performed at a temperature of ≥200 °C to ≤1800 °C

Surprisingly, it has been shown that by doing so, a material with the desired and inventive features may be produced easily and effectively for many applications.

Preferably, the pressing step is performed at a temperature of ≥1300 °C to ≤1700 °c.

Surprisingly, it has been found that for many applications within the present invention the texture of the polycrystalline ceramic converter material may be induced by uniaxial hot pressing. During uniaxial hot pressing, the plate-like ceramic grains are preferentially orientated with their surface normal in the uniaxial hotpressing direction.

According to a preferred embodiment of the present invention, the at least one precursor compound consists essentially of crystalline grains showing an aspect ratio of ≥ 2:1.
The term "aspect ratio" especially means the ratio of the longest to the shortest dimension of the particle grains. A large aspect ratio is found for e.g. plate-like and needle-like particles.
It has been shown for many applications within the present invention that by doing as stated above , the desired features of the ceramic converter material made by the inventive method may be further enhanced, especially the scattering of light back to the direction of incidence may be reduced.
Preferably, at least one precursor compound essentially has an aspect ratio of ≥ 3:1, more preferably ≥ 4:1.

According to a preferred embodiment of the present invention, at least one precursor compound essentially is made out of plates and/or flakes with a diameter of ≥500 nm.

For many applications this has been shown to also facilitate the manufacturing process and lower the scattering of the produced ceramic converter material.

Preferably, at least one precursor compound essentially is made out of plates and/or flakes with a diameter of ≥700 nm, more preferably ≥1 µm

According to a preferred embodiment of the present invention, the pressing step is performed at a pressure of ≥50 MPa.

A light emitting device comprising a ceramic converter material according to the present invention as well as a ceramic converter material as produced with the present method may be of use in a broad variety of systems and/or applications, such as inter alia one or more of the following:
- Office lighting systems
- household application systems
- shop lighting systems,
- home lighting systems,
- accent lighting systems,
- spot lighting systems,
- theater lighting systems,
- fiber-optics application systems,
- projection systems,
- self-lit display systems,
- pixelated display systems,
- segmented display systems,
- warning sign systems,
- medical lighting application systems,
- indicator sign systems, and
- decorative lighting systems
- portable systems
- automotive applications
- green house lighting systems

The aforementioned components, as well as the claimed components and the components to be used in accordance with the invention in the described embodiments, are not subject to any special exceptions with respect to their size, shape, material selection and technical concept, such that the selection criteria known in the pertinent field can be applied without limitations.

### BRIEF DESCRIPTION OF THE DRAWINGS

Additional details, features, characteristics and advantages of the object of the invention are disclosed in the sub-claims, the figures and the following description of the respective figures and examples, which --in an exemplary fashion-- show several embodiments and examples of a material for use in a light emitting device according to the invention.
- Fig. 1: shows an XRD- pattern for a material according to Example I of the present invention
- Fig. 2: shows an XRD -pattern for a material according to Comparative Example I
- Fig. 3: shows an angle-resolved measurement of the scattering intensity of Inventive Example I and Comparative Example I
- Fig. 4: shows an emission spectrum of Inventive Example I and Comparative Example I
- Fig. 5: shows an optical micrograph of the structure of the ceramic converter material according to Example I after grinding and polishing, and
- Fig. 6: shows a very schematic experimental setup for the measurement of the texture of the ceramic converter material.

The invention will be better understood from the following detailed description of Example I which - in a merely illustrative fashion - is one Example of an inventive ceramic converter material. Both Inventive Example I and Comparative Example I refer to SrSi₂O₂N₂:Eu ceramics.

### EXAMPLE I

A precursor powder of nominal composition Sr_{0.98}Eu_{0.02}.Si₂O₂N₂ was synthesized by mixing Eu-doped strontium orthosilicate, (Sr_{0.98}Eu_{0.02}SiO₄ with silicon nitride by milling, firing the mixture at 1400 °C in N₂/H₂ atmosphere, and finally milling and screening the raw product.

Approximately 4 g precursor powder were filled in a graphite pressing tool,
pre-densified, and finally uniaxially hot-pressed for 5 h at 1500 °C and 70 MPa in a nitrogen atmosphere.

The resulting ceramic body was sliced, ground and polished to a final thickness of 100 µm.

### Comparative Example I (conventional sintering)

A precursor powder of nominal composition Sr_{0.98}Eu_{0.02}Si₂O₂N₂ was synthesized by mixing Eu-doped strontium orthosilicate, (Sr_{0.98}Eu_{0.02}SiO₄ with silicon nitride by milling in inert-gas atmosphere, firing the mixture at 1200 °C in N₂/H₂ atmosphere, and finally milling and screening the raw product.

The powder was uniaxially and isostatically cold-pressed and the resulting disc-shaped pellet sintered for 5 h at 1550 °C at ambient pressure in a nitrogen atmosphere.

The resulting ceramic body was ground and polished to a final thickness of 100 µm.

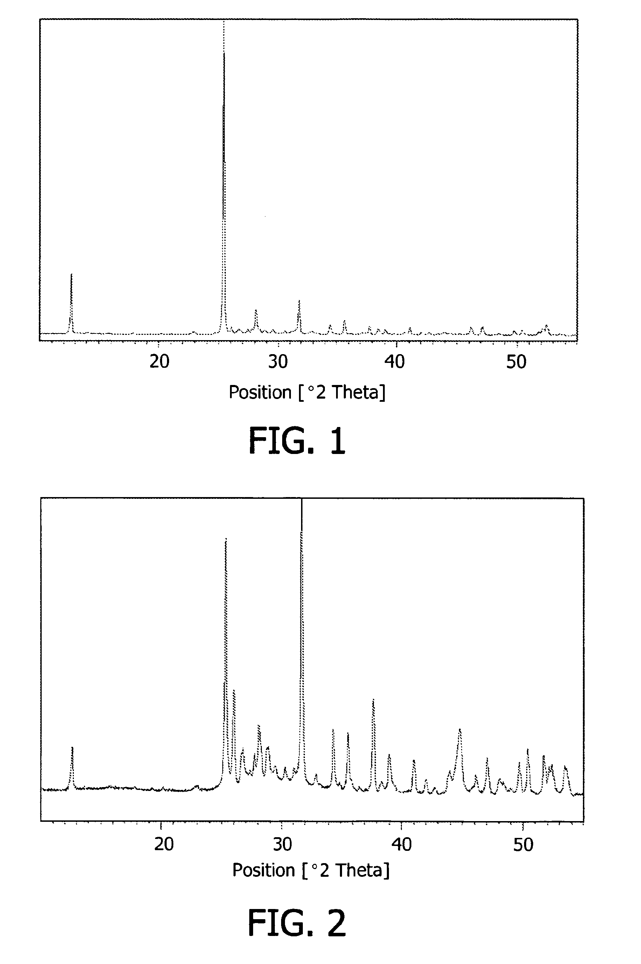

Figs 1 and 2 show XRD patterns of Inventive Example I and Comparative Example I, respectively. The XRD patterns were obtained with the incident X-ray beam positioned perpendicularly to the plate normal for θ = 0°, with the plate normal being (a) parallel to the uniaxial hot pressing direction of example I and (b) parallel to the uniaxial cold pressing direction of the comparative example I.

Fig. 3 shows the normalized angular scattering intensity distribution of transmitted light for a normal incidence 660 nm Laser beam for wafers of 100 µm thickness according to Inventive Example I (thick line) and Comparative Example I (dotted line). The surfaces of the wafers are polished to optical quality (Ra < 20 nm). Scattering of light is therefore due to scattering events within the wafers only.

It can be clearly seen that the scattering of the inventive material clearly differs from that of the comparative example. That is to say, the scattering intensity SI(20) at 20° is > 2 times the scattering intensity SI(40) at 40°, and the scattering intensity SI(30) at 30° is > 3 times the scattering intensity SI(60) at 60°, whereas in the comparative example, these ratios are much smaller.

Fig. 4 shows emission spectra on a blue LED of Inventive Example I (thick line) and Comparative Example I (dotted line). Due to the superior scattering features, the emittance characteristics of the Inventive Example are superior to those of the Comparative Example.

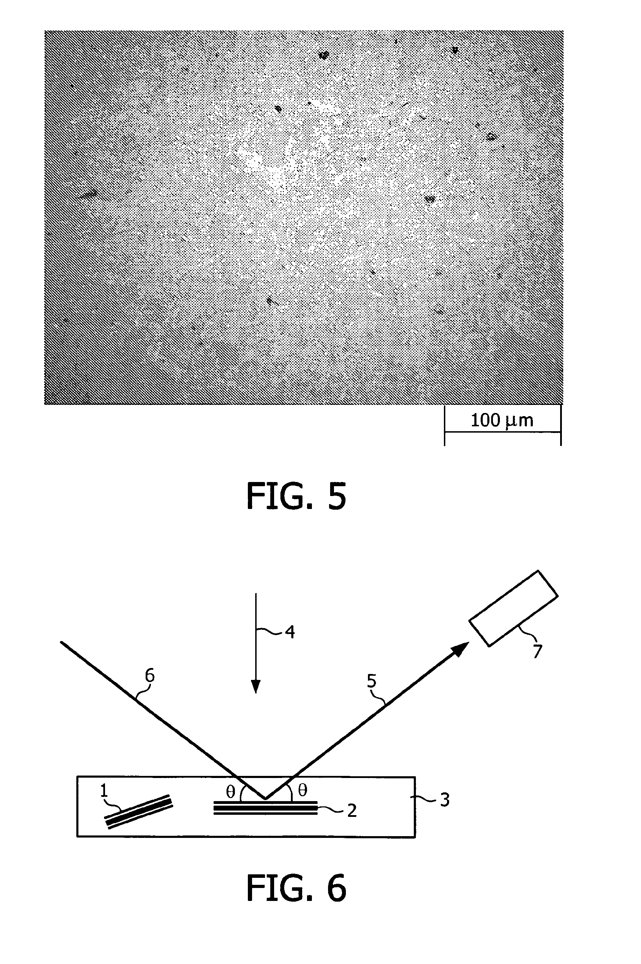

Fig. 5 shows an optical micrograph of the structure of the ceramic converter material according to Example I after grinding and polishing. It can be seen that the ceramic converter material comprises many large grains and/or plates, some of them with a diameter of 50 µm or more. The average d₅₀ is about 4 µm. Without being bound to any theory, the inventors believe that this unorthodox structure at least partly causes the inventive and desired advantages of the material of the present invention.

In the following, the structure of the material according to Example I as well as a general set-up for the measurement of the texture of the materials according to preferred applications of the present invention is discussed.

The preferred orientation of the constituent crystallite grains inside the ceramic converter material may be quantified by means of X-ray diffraction.

Fig. 6 shows a very schematic experimental setup for the measurement of the texture of the ceramic converter material. In the ceramic sample 3, two plate-like ceramic crystallites 1 and 2 whose lattice planes are almost perpendicular or - as desired for highly textured ceramics - perpendicular to the plate normal, respectively, are indicated. The ceramic plate 3 to be examined is subjected to an incident X-ray beam 6. The diffracted beam 5 is measured with an X-ray detector 7. θ is the diffraction angle. The surface normal of the ceramic plate coincides with the pressing direction during uniaxial hot-pressing, which is indicated by arrow 4.

A quantitative determination of crystallographic texture may be done by combining a θ- 2θ scan with a θ scan over a preferred-orientation reflection peak as described in non-patent literature M. D. Vaudin et al., J. Mater. Res. 13 (1998) 2910, which is hereby fully incorporated by reference.

Constructive interference that leads to diffraction maxima of the X-ray radiation is preferentially observed for the reciprocal lattice planes of the plate-like crystallite grains that are perpendicular to the pressing direction if the X-ray diffraction experiment is carried out in such a way that the incident X-ray beam is positioned perpendicularly to the uniaxial hot pressing direction of the ceramic for θ = 0°. If a symmetric θ- 2θ scan of an X-ray detector in Bragg-Brentano geometry is carried out in such a way that for θ = 90° the detector is positioned parallel to the plane normal to the ceramic sample, reflections originating from diffraction at lattice planes that are orientated perpendicularly or nearly perpendicularly to the pressing direction are strongly enhanced, while reflections originating from diffraction at lattice planes that are orientated parallel or nearly parallel to the pressing direction are strongly weakened.

Further examination of the material of Example I gave the following results:

According to results of crystal structure determination, e.g. described in O. Oeckler, F. Stadler, T. Rosenthal, W. Schnick, Solid State Sci., 2007, 9(2), 205-212, which is fully incorporated herein by reference, SrSi₂O₂N₂ is built-up by sheets of corner sharing [SiON₃] tetrahedra with terminal oxygen ions that form the coordination environment of Sr or dopant ions, which are located between the [Si₂O₂N₂] sheets. Therefore, a plate-like morphology can be observed for the SrSi₂O₂N₂ precursor compounds.

For hot-pressed SrSi₂O₂N₂:Eu type ceramics that consist of plate-like grains, details are explained in the Example section. A generally suitable measuring geometry for disc-shaped ceramic samples (as applied in all measurements described below) is explained in the following section.

In respect of the structure, the (0 k 0) reciprocal lattice planes are oriented parallel to the [Si₂O₂N₂] sheets and are therefore also normal to the SrSi₂O₂N₂ plate normals. For samples with a significant preferential orientation, especially reflections with Miller indices (0 k 0) show increased intensity compared to other reflections. The (0 1 0) reflection of SrSi₂O₂N₂ is found at 2θ ~ 12.6°, whereas the (0 2 0) peak overlaps with the (1 2 0) peak at 2θ ~ 25.4° (the sum of both peaks will be referred to as peak A). The reflection with maximum theoretical intensity, the (2 2 0) peak, is found at 2θ ~31.8° and overlaps with the (2 -1 0) reflection (the sum of both peaks will be referred to as peak B).

Comparing the XRD patterns of the hot-pressed (inventive Example I) and the conventionally sintered (comparative Example I) material, it becomes evident that hot-pressing results in ceramics with a strong preferential orientation of the crystallites. Even the peak at 2θ ~ 12.6° shows a higher intensity than peak B.

Ceramics according to the comparative example 1 do not exhibit a significant preferential orientation and show intensity ratios Int_{peak A} : Int_{peak B} < 1, whereas the existence of a preferential orientation is indicated by Int_{peak A} Int_{peak B} > 1.

Samples with a strong preferential orientation should exhibit a ratio of Int_{peak A} : Int_{peak B} >3, preferably > 5. For the hot-pressed ceramic describe above (Inventive example 1), an intensity ratio of Int_{peak A} : Int_{peak B} ~ 9.4 is observed (based on peak heights after background correction), showing that a very strong preferential orientation can be observed.

## Claims

1. Ceramic converter material for light emitting devices, especially LEDs having a scattering intensity SI(20) at 20° and a scattering intensity SI(40) at 40°, with SI(20)/SI(40) >1.6, wherein the material has the composition Sr_{1-y-z}M_{y}Si₂O₂N_{2:}Eu₂ wherein M is selected out of the group comprising Ca, Ba, Mg or mixtures thereof, and y is ≥ 0 to ≤1, and z is ≥ 0.0001 to ≤0.5.

2. The ceramic converter material of claim 1, having a scattering intensity SI(30) at 30° and a scattering intensity SI(60) at 60°, with SI(30)/SI(60) >1.9.

3. The ceramic converter material of claim 1 or 2, wherein the ceramic converter material shows a preferred orientation of its constituent crystallite grains.

4. The ceramic converter material of any of the claims 1 to 3, wherein the material is essentially made out of grains with a d₅₀ of ≥5 µm.

5. A method of producing a material according to any of the claims 1 to 4, comprising uniaxially hot pressing of at least one precursor compound, the pressing step being performed at a temperature of ≥1200 °C two ≤1800 °C

6. The method of claim 5, wherein the at least one precursor compound essentially has an aspect ratio of ≥ 2:1

7. The method of claim 5 or 6, wherein the at least one precursor compound essentially is made out of plates and/or flakes with a diameter of ≥500 nm.

8. The method of any of the claims 6 to 7, wherein the pressing step is performed at a pressure of ≥50 MPa

9. A system comprising a material that is in accordance with any of the claims 1 to 4 and/or that is produced according to any of the claims 5 to 8, the system being used in one or more of the following applications:
Office lighting systems
household application systems
shop lighting systems,
home lighting systems,
accent lighting systems,
spot lighting systems,
theater lighting systems,
fiber-optics application systems,
projection systems,
self-lit display systems,
pixelated display systems,
segmented display systems,
warning sign systems,
medical lighting application systems,
indicator sign systems, and
decorative lighting systems
portable systems
automotive applications
green house lighting systems

## Patentansprüche

1. Keramisches Konvertermaterial für Licht emittierende Einrichtungen, insbesondere LEDs mit einer Streuintensität SI(20) bei 20° und einer Streuintensität SI(40) bei 40°, wobei Si(20)/Si(40) > 1,6, wobei das Material die Zusammensetzung Sr_{1-y-z}M_{y}Si₂O₂N₂:Eu_{z} aufweist, wobei M aus der Gruppe, umfassend Ca, Ba, Mg oder Mischungen daraus, ausgewählt wird und y ≥ 0 bis ≤1 und z ≥ 0,0001 bis ≤ 0,5 ist.

2. Keramisches Konvertermaterial nach Anspruch 1, mit einer Streuintensität SI(30) bei 30° und einer Streuintensität SI(60) bei 60°, wobei SI(30)/SI(60) > 1,9.

3. Keramisches Konvertermaterial nach Anspruch 1 oder 2, wobei das keramische Konvertermaterial eine bevorzugte Ausrichtung seiner konstituierenden Kristallkörner zeigt.

4. Keramisches Konvertermaterial nach einem der Ansprüche 1 bis 3, wobei das Material im Wesentlichen aus Körnern mit einem d₅₀ von ≥ 5 µm gefertigt ist.

5. Verfahren zur Erzeugung eines Materials nach einem der Ansprüche 1 bis 4, das ein uniaxiales Heißpressen von mindestens einer Vorläuferverbindung umfasst, wobei der Pressschritt bei einer Temperatur von ≥ 1200 °C bits ≤ 1800 °C ausgeführt wird.

6. Verfahren nach Anspruch 5, wobei die mindestens eine Vorläuferverbindung im Wesentlichen ein Aspektverhältnis von ≥ 2:1 aufweist.

7. Verfahren nach Anspruch 5 oder 6, wobei die mindestens eine Vorläuferverbindung im Wesentlichen aus Platten und/oder dünnen Schichten mit einem Durchmesser von ≥ 500 nm gefertigt ist.

8. Verfahren nach einem der Ansprüche 6 bis 7, wobei der Pressschritt bei einem Druck von ≥ 50 MPa ausgeführt wird.

9. System, das ein Material nach einem der Ansprüche 1 bis 4 umfasst und/oder das nach einem der Ansprüche 5 bis 8 hergestellt wird, wobei das System für eine oder mehrere der folgenden Anwendungen verwendet wird:
Bürobeleuchtungssysteme,
Systeme zum Einsatz im Haushalt,
Ladenbeleuchtungssysteme,
Beleuchtungssysteme für den Wohnbereich,
Akzentbeleuchtungssysteme,
Spot-Beleuchtungssysteme,
Theaterbeleuchtungssysteme,
Lichtleitersysteme,
Proj ektionssysteme,
selbstleuchtende Display-Systeme,
pixelierte Display-Systeme,
segmentierte Display-Systeme,
Warnzeichensysteme,
Beleuchtungssysteme zur medizinischen Anwendung,
Hinweissysteme, sowie
Systeme für dekorative Beleuchtung,
portable Systeme,
zur Verwendung in Kraftfahrzeugen,
Gewächshaus-Beleuchtungssysteme.

## Revendications

1. Matériau convertisseur céramique pour dispositifs luminescents, particulièrement des LEDs possédant une intensité de diffusion SI(20) à 20° et une intensité de diffusion SI(40) à 40°, avec SI(20)/SI(40) > 1,6, dans lequel le matériau possède la composition Sr_{1-y-2}M_{y}Si₂O₂N₂:Eu_{z} dans laquelle M est sélectionné parmi le groupe comprenant Ca, Ba, Mg ou des mélanges de ceux-ci, et y est ≥ 0 à ≤ 1, et z est ≥ 0,0001 à ≤ 0,5.

2. Matériau convertisseur céramique selon la revendication 1, possédant une intensité de diffusion SI(30) à 30° et une intensité de diffusion SI(60) à 60°, avec SI(30)/SI(60) > 1,9.

3. Matériau convertisseur céramique selon la revendication 1 ou 2, dans lequel le matériau convertisseur céramique présente une orientation préférée de ses grains cristallins constituants.

4. Matériau convertisseur céramique selon une quelconque des revendications 1 à 3, dans lequel le matériau est essentiellement composé de grains avec un d₅₀ de ≥ 5 µm.

5. Procédé de production d'un matériau selon une quelconque des revendications 1 à 4, comprenant l'étape consistant à presser à chaud de façon uniaxiale au moins un composé précurseur, l'étape consistant à presser étant réalisée à une température de ≥ 1200 °C à ≤ 1800 °C.

6. Procédé selon la revendication 5, dans lequel l'au moins un composé précurseur possède essentiellement un rapport d'aspect de ≥ 2:1.

7. Procédé selon la revendication 5 ou 6, dans lequel l'au moins un composé précurseur est essentiellement composé de plaquettes et/ou de flocons avec un diamètre de ≥ 500 nm.

8. Procédé selon une quelconque des revendications 6 et 7, dans lequel l'étape consistant à presser est réalisée à une pression de ≥ 50 MPa.

9. Système comprenant un matériau qui est selon une quelconque des revendications 1 à 4 et/ou qui est produit selon une quelconque des revendications 5 à 8, le système étant utilisé dans une ou plusieurs des applications suivantes :
des systèmes d'éclairage de bureaux,
des systèmes d'application domestique,
des systèmes d'éclairage de magasins,
des systèmes d'éclairage domestiques,
des systèmes d'éclairage à accent,
des systèmes d'éclairage à projecteur,
des systèmes d'éclairage de théâtres,
des systèmes d'application à fibre optique,
des systèmes de projection,
des systèmes d'affichage auto-éclairés,
des systèmes d'affichage pixélisés,
des systèmes d'affichage segmentés,
des systèmes de signaux avertisseurs,
des systèmes d'application d'éclairage médical,
des systèmes de signaux indicateurs, et
des systèmes d'éclairage décoratifs,
des systèmes portables,
des applications automobiles,
des systèmes d'éclairage de serres.
